(19) Europäisches Patentamt
European Patent Office
Office européen des brevets

(11) **EP 2 554 350 A1**

(12) **EUROPEAN PATENT APPLICATION**
published in accordance with Art. 153(4) EPC

(43) Date of publication:
**06.02.2013 Bulletin 2013/06**

(51) Int Cl.:
***B29C 43/22*** (2006.01)    ***B29C 43/34*** (2006.01)
***B29C 47/14*** (2006.01)    ***B29C 47/88*** (2006.01)
***B29C 55/18*** (2006.01)    ***H01M 2/16*** (2006.01)
***B29L 7/00*** (2006.01)

(21) Application number: **11765863.3**

(22) Date of filing: **29.03.2011**

(86) International application number:
**PCT/JP2011/058489**

(87) International publication number:
**WO 2011/125963 (13.10.2011 Gazette 2011/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010 JP 2010081656**

(71) Applicant: **Sumitomo Chemical Company Limited
Tokyo 104-8260 (JP)**

(72) Inventors:
• **TAKATA, Atsuhiro
Niihama-shi Ehime 792-0022 (JP)**
• **SUZUKI, Toshihiko
Ichihara-shi
Chiba 299-0125 (JP)**
• **YAMAGUCHI, Takanari
Niihama-shi
Ehime 792-0017 (JP)**

(74) Representative: **Brunetti, Fabrizio et al
Cabinet Beau de Loménie
158, rue de l'Université
75340 Paris Cedex 07 (FR)**

(54) **METHOD FOR PRODUCING THERMOPLASTIC RESIN FILM**

(57) The present invention relates to a method for producing a film containing a thermoplastic resin, the method comprising: a step of feeding a material containing a thermoplastic resin and having a pair of opposed flat portions to between a pair of rollers with the thermoplastic resin in a molten state, and a step of rolling, with the pair of rollers, the pair of flat portions being stacked, thereby welding the flat portions to each other to form a united film, wherein the material to be fed to between the rollers is two separate films each having a flat portion or one flat cylindrical film having a pair of opposed flat portions linked together by connecting portions at their end portions.

Fig. 1

Printed by Jouve, 75001 PARIS (FR)

**Description**

**TECHNICAL FIELD**

The present invention relates to a method for producing a thermoplastic resin films.

**BACKGROUND ART**

Conventionally, as a method for producing a thermoplastic resin film, a T-die molding method for extruding a molten thermoplastic resin into a thin film out of a wide slit die, so-called T-die, an inflation molding method for molding a cylindrical film by extruding a molten thermoplastic resin into a cylindrical shape out of a die slit such as a ring die, a calendar molding method for molding a thermoplastic resin using two or more calendar rolls as described in JP10-296766A, and a roll molding method such as a roll molding method for rolling a thermoplastic resin with a pair of rollers as described in JP2002-264160A are known.

However, in the T-die molding method and the inflation molding method, when a resin with a high melt viscosity or a resin with low melt elongation is used, it is difficult to obtain a film that is superior in the film thickness precision.

On the other hand, the calendar molding method and the roll molding method are used as a useful molding method for molding a thermoplastic resin with a high melt viscosity into a film. In these methods, a melted resin is roller with a pair of rollers while forming a rolling bank of the melted resin (bank of the molten resin) to mold a film.

However, a resin in the surface of a rolling bank is gradually cooled to harden, and thus remains between rollers. When a hard resin in the surface of a rolling bank is partly fed to between the rollers, it results in deteriorating film quality such as having variation in the thickness of the obtained film.

Therefore, in JP6-63981A, a method of cutting, by a cutter capable of moving, a rolling bank on a pair of rollers in the same direction as the axial direction of the rollers is suggested. However, since the rolling bank is stirred in this method, the thickness precision of the obtained film is not necessarily sufficient. Also, this method has a problem that it is difficult to apply to a resin with a high melt viscosity.

**BRIEF DESCRIPTION OF THE DRNMINGS**

Fig. 1 is a schematic view showing one example of the method of the present invention.
Fig. 2 is a schematic view showing one example of the method of the present invention.
Fig. 3 is a schematic cross-sectional view of a multi-slot T-die.
Fig. 4 is a schematic view showing one example of the method of the present invention when one flat cylindrical film having a pair of opposed flat portions linked together by connecting portions at their end portions is extruded.
Fig. 5 is a schematic cross-sectional view of one flat cylindrical film having a pair of opposed flat portions linked together by connecting portions at their end portions.
Fig. 6 is a schematic view showing angle θ of feeding a material having a pair of opposed flat portions to between a pair of rollers.
Fig. 7 is a schematic view showing one example of the method for producing a film while forming a rolling bank.
Fig. 8 is a schematic view showing one example of the method for producing a film while forming a rolling bank.
Fig. 9 is a schematic view showing one example of the method for producing a film while forming a rolling bank.
Fig. 10 is a schematic view showing an embodiment of Comparative Example 3.

**DISCLOSURE OF THE INVENTION**

In consideration of the problems of the above-described conventional technologies, the object of the present invention is to provide a method for producing a film with high film thickness precision even when a thermoplastic resin such as polyvinyl chloride and polyolefin, especially a resin with a high melt viscosity and low melt elongation is used as a material for producing a film.

The present invention is a method for producing a film containing a thermoplastic resin, the method comprising: a step of feeding a material containing a thermoplastic resin and having a pair of opposed flat portions to between a pair of rollers with the thermoplastic resin in a molten state, and a step of rolling, with the pair of rollers, the pair of flat portions being stacked, thereby welding the flat portions to each other to form a united film, wherein the material to be fed to between the rollers is two separate films each having a flat portion or one flat cylindrical film having a pair of opposed flat portions linked together by connecting portions at their end portions.

## MODE FOR CARRYING OUT THE INVENTION

The present invention is a method for producing a film containing a thermoplastic resin, and the method comprising: a step of feeding a material containing a thermoplastic resin and having a pair of opposed flat portions to between a pair of rollers with the thermoplastic resin in a molten state, and a step of rolling, with the pair of rollers, the pair of flat portions being stacked, thereby welding the flat portions to each other to form a united film, wherein the material to be fed to between the rollers is two separate films each having a flat portion or one flat cylindrical film having a pair of opposed flat portions linked together by connecting portions at their end portions.

The phrase "the thermoplastic resin in a molten state" in the present invention refers to that the temperature T of the thermoplastic resin satisfies the following condition:

when the thermoplastic resin is crystalline,
T>Tm
when the thermoplastic resin is not crystalline,
T>Tg
where Tm is the melting point of the thermoplastic resin and Tg is the glass transition temperature of the thermoplastic resin.

Herein, the phrase "when the thermoplastic resin is crystalline" in the present invention means that, in the material containing the thermoplastic resin to be used, the resin has a crystallinity determined by wide angle x-ray diffraction of 10% or more. On the other hand, the phrase "the thermoplastic resin is not crystalline" means that, in the material containing the thermoplastic resin to be used, the resin has a crystallinity determined by wide angle x-ray diffraction of less than 10%. Incidentally, these definitions are applied to not only a single resin but also a mixed resin.

When a determination sample is a composition containing a resin and a filler, based on the result of determining a composition, a scattering contribution from a resin and a scattering contribution from a filler are separated, and the crystallinity can be determined from the value of scattering contribution of a resin part alone. When it is difficult to separate the scattering contribution of a resin part alone based on the result of determining a composition, the filler may be previously removed from the composition by a solvent or the like to obtain a resin part, and the crystallinity of the resin part may be determined.

A pair of rollers is used in the present invention. The pair of rollers is disposed such that the material fed to between the rollers can be sandwiched. It is preferred that the material fed to between the rollers be rolled while rotating the pair of rollers at the substantially same peripheral speed. In this case, the peripheral of the pair of rollers is not necessarily the same peripheral speed, and it is acceptable if the difference in the peripheral speed is within ±10% and more preferably within ±5%.

The material fed to between the rollers is rolled with the rollers, and then the rolled material may be further molded by other forming tools.

The present invention comprises a step of feeding a material containing a thermoplastic resin and having a pair of opposed flat portions to between a pair of rollers with the thermoplastic resin in a molten state.

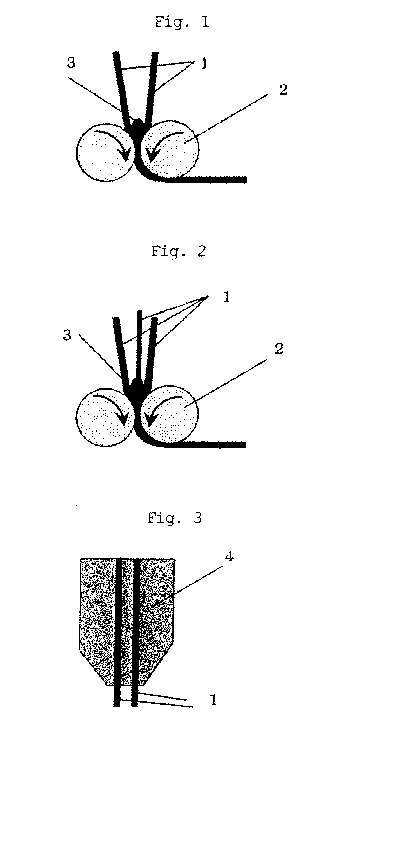

The phrase "feeding a material having a pair of opposed flat portions to between a pair of rollers" refers to the state shown in Fig. 1 and Fig. 2. More specifically, when the material is seen from the cross section intersecting with a pair of opposed flat portions contained in the material, that is, a direction perpendicular to an axis of a pair of rollers, it is a state that each independent flat portion is fed to between the pair of rollers from two directions. As shown in Fig. 2, a material having three or more flat portions may be fed to between a pair of rollers.

The present invention has a step of rolling, with the pair of rollers, the pair of flat portions being stacked, thereby welding the flat portions to each other to form a united film. When a material having three or more flat portions is fed to between a pair of rollers, all the fed materials are welded to form a united film.

Furthermore, in the present invention, it is preferred that the step of rolling the pair of flat portions being stacked be a step of rolling, with the pair of rollers, the pair of flat portions being stacked, while forming a rolling, bank made of the material at the entrance of the gap between the rollers and on a side of the material opposite to the side at which each of the material comes into contact with each of the rollers, thereby welding the flat portions to each other to form a united film. The method of the present invention having the step is a method capable of rolling the material fed to between the rollers more uniformly by the rollers. In addition, in the method of the present invention having the step, since a rolling bank is formed between a pair of flat portions at the entrance of the gap between the rollers, the rolling bank is kept warm by the flat portions. Therefore, the surface of the rolling bank is unlikely to be hard. In addition, in order to obtain a film superior in surface gloss, it is preferred that the rolling bank be prevented from coming into contact with the pair of rollers.

In the present invention, a material containing a thermoplastic resin and having a pair of opposed flat portions is fed to between a pair of rollers with the thermoplastic resin in a molten state.

For example, when a material whose cross section when the material is cut in a direction perpendicular to a material feeding direction is circular is fed to between the rollers, the material and rollers are in contact at a point. In this case, since there is a time lag at the time of starting the contact between each point and the rollers in each point in a direction parallel to the axis of the rollers in the fed material, distribution is generated in a flow of material feeding direction, thereby generating pockmarks and creating holes on the obtained film. As the present invention, a material having a pair of opposed flat portions is fed to between a pair of rollers, the material and rollers are in contact with a line to the direction parallel to the rollers, and thus the material uniformly flows to the feed direction, and the obtained film is superior in the film thickness precision. Incidentally, the material fed to between a pair of rollers is acceptable if the portion in contact with the roller is flat, and when the width of the material is wider than the width of the roller, it is not necessary that the edge of the material not in contact with the roller is flat.

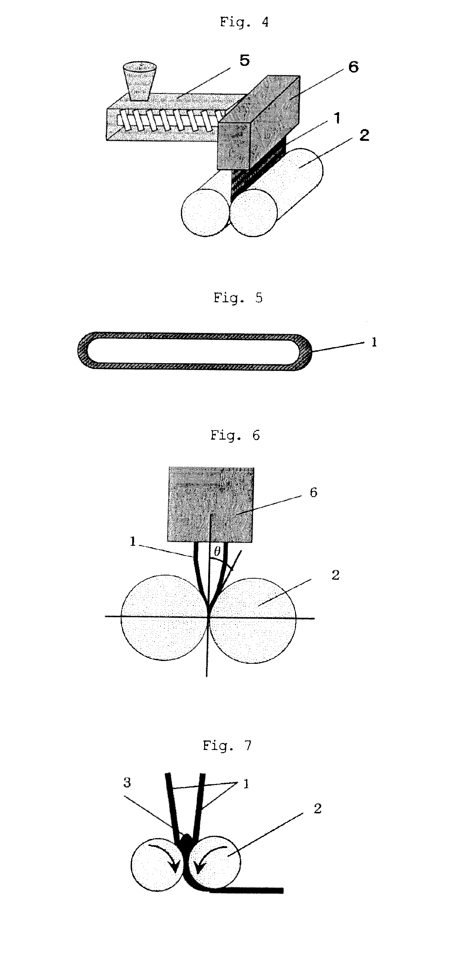

The material having a pair of opposed flat portions is two separate films each having a flat portion or one flat cylindrical film having a pair of opposed flat portions linked together by connecting portions at their end portions. The two separate films each having a flat portion may be flat at a part of each film or may be flat at whole film. Examples of the combination of the two separate films each having a flat portion include a combination of the sheets each obtained by rolling a material with a roller or the like, a combination of the sheets obtained using two T-dies by extruding a material from each T-die, and a pair of sheets formed by extruding a material from one T-die such as a multi-slot T-die (for example, Fig. 3). Examples of the one flat cylindrical film having a pair of opposed flat portions linked together by connecting portions at their end portions include one flat cylindrical film having a pair of opposed flat portions linked together by connecting portions at their end portions formed by extruding a material from one die (for example, Fig. 5).

Since equipment configuration is sample, and it is easy to roll the pair of opposed flat portions being stacked between the pair of rollers, it is preferred that the material be one flat cylindrical film having a pair of opposed flat portions linked together by connecting portions at their end portions. It is preferred that such material be extruded from one die. Particularly, even when the material contains a thermoplastic resin with a high melt viscosity, a material having flat portion with uniform thickness is likely to be formed, and thus it is preferable to use a multi-slot T-die capable of forming one flat cylindrical film having a pair of opposed flat portions linked together by connecting portions at their end portions. The phrase "one flat cylindrical film having a pair of opposed flat portions linked together by connecting portions at their end portions" represents that the cross section in a direction perpendicular to the extrusion direction of the material is a shape formed by substantially parallel lines and an arc connecting these lines. The connecting portions correspond to the arc. The substantially parallel lines in the cross section correspond to a pair of opposed flat portions.

When the method of the present invention is a method including the step of feeding a material containing a thermoplastic resin that is one flat cylindrical film having a pair of opposed flat portions linked together by connecting portions at their end portions to between a pair of rollers with the thermoplastic resin in a molten state and the step of rolling, with the pair of rollers, the pair of flat portions being stacked, while forming a rolling bank made of the material at the entrance of the gap between the rollers and on a side of the material opposite to the side at which each of the material comes into contact with each of the rollers, thereby welding the flat portions to each other to form a united film, the rolling bank is not in contact with the rollers. In this case, the rolling bank is kept warm by the material fed to between the rollers, and the temperature is uniformly maintained. Therefore, even using a material with a high melt viscosity, it is easy to produce a film that is superior in the film thickness precision. Hereinbelow, a die that can extrude the material into one flat cylindrical film having a pair of opposed flat portions linked together by connecting portions at their end portions is sometimes called as "a die capable of extruding a flat cylindrical film".

Particularly, among dies capable of extruding a flat cylindrical film, it is preferable to use a multi-slot die. A multi-slot die capable of extruding a flat cylindrical film is a die having two or more resin flow channels in the die, in which these flow channels join together around the exit of the die, and a molten resin extruded from the flow channels forms a flat cylindrical film.

When the multi-slot T-die or the die such as a die capable of extruding a flat cylindrical film is used, the resin flow channel in the die is preferably a coat hunger type. It is because, even when using a resin with a high melt viscosity, the resin pressure of the extruder can be reduced, and the material is easily uniformly extruded to the width direction of the flat portion extruded from the die.

Since it can make harder to generate pockmarks or the like on the surface of the film to be obtained, angle $\theta$ of feeding a material having a pair of opposed flat portions to between a pair of rollers is preferably 0 to 45 degrees and further preferably 0 to 30 degrees. Incidentally, the above angle is, as shown in Fig. 6, a value obtained by subtracting an angle formed by a line connecting the centers of each roller and a tangent of the roller in a point where the material firstly has contact with the roller from 90°. The angle of feeding each material having a pair of opposed flat portions to between a pair of rollers may vary, but is preferably the same.

The material fed to between the rollers may be either a single layer or a multilayer. When the material is a multilayer and a roller surface temperature is higher than Tg and Tm, it is preferable to feed the material to between the rollers such that, among multilayer materials, the layer made of the resin with a high melt viscosity is on the side in contact with the roller and the layer made of the resin with a low melt viscosity is on the side not in contact with the roller, since more uniform film is obtained.

In the present invention, it is preferred that the surface temperature $T_R$ of a pair of rollers satisfy the following condition 1 or following condition 2:

(Condition 1)
when the thermoplastic resin is crystalline,
$T_R > Tm$
when the thermoplastic resin is not crystalline,
$T_R > Tg$
(Condition 2) the melt tensile strength MT and degree of elongation L of the thermoplastic resin contained in the material at the temperature $T_R$ satisfy the following requirements:

MT > 10 g
L > 100%

It is noted that, in Condition 1, Tm is the melting point of the thermoplastic resin and Tg is the glass transition temperature of the thermoplastic resin. The melting point Tm of the thermoplastic resin is the peak temperature in DSC (differential scanning calorimetry), and when there are two or more peaks, the peak temperature with the highest heat quantity of melting ΔH (J/g) is defined as the melting point. Also, the temperature rising rate on measuring the melting point is adjusted to be 5°C /min. The glass transition temperature Tg of the thermoplastic resin is a temperature in the peak of loss elastic modulus E" in viscoelasticity measurement at a frequency of 110 Hz. When there are two or more peaks, the temperature in the peak at the higher temperature side is defined as Tg.

Particularly, when the thermoplastic resin is crystalline, the surface temperature $T_R$ of the pair of rollers is preferably a temperature higher than the melting point and not more than (Tm + 30) °C, and more preferably a temperature not less than (Tm + 10) °C and not more than (Tm + 30) °C. The surface temperature $T_R$ of each roller may be the same or may be different from each other.

MT and L in Condition 2 are measured by the following methods.

[MT] As a measurement apparatus, Capirograph 1B PC-9801VM manufactured by Toyo Seiki Manufacturing Co., Ltd. is employed, and an orifice with a diameter D = 2.095 mm and a length L = 14.75 mm is used. A resin is extruded at a rate of 5 mm/min at a prescribed temperature and pulled out while increasing the pulling out speed, and the pulling out speed when the resin is cut is defined as "maximum pulling out speed". The melt tensile strength of the thermoplastic resin at the maximum pulling out speed is set to be the melt tensile strength at that temperature.

[L (degree of elongation)] As a measurement apparatus, Capirograph 1B PC-9801VM manufactured by Toyo Seiki Manufacturing Co., Ltd. is employed, and an orifice with a diameter D = 2.095 mm and a length L = 14.75 mm is used. First, a resin is extruded at a rate of 5 mm/min at a prescribed temperature, and diameter D1 (mm) of the resin extruded from the orifice is determined. Next, the resin is pulled out while increasing the pulling out speed, and diameter D2 (mm) of the resin when the resin is cut is determined to calculate the degree of elongation from the following equation:

$$\text{Degree of Elongation L (\%)} = [(D1^2 - D2^2)/D2^2] \times 100.$$

When the surface temperature of the rollers satisfies either Condition 1 or Condition 2 and preferably satisfies Condition 1 and Condition 2 in producing a film, a film with high film thickness precision can be obtained even when the material contains a resin with a high melt viscosity and low melt elongation, for example, a thermoplastic resin containing the thermoplastic resin having a molecular chain length of 2,850 nm or more set forth below.

The method for adjusting the surface temperature of the roller to a prescribed temperature is not particularly limited, and the examples thereof include a method of installing a heater inside the roller, a method of passing heated water, heat oil or steam, inside the roller, and a method of externally heating around the roller.

The thermoplastic resins contained in the materials used in the present invention may be a single thermoplastic resin or may be a combination of two or more thermoplastic resins. The thermoplastic resin includes polyolefin resins such as homopolymers of an olefin such as ethylene, propylene, butene and hexene, copolymers of two or more olefins thereof, copolymers of one or more olefins and one or more polymerizable monomers possible to be polymerized with the olefins, acrylic resins such as polymethyl acrylate, polymethyl methacrylate and ethylene-ethyl acrylate copolymer, styrene resins such as butadiene-styrene copolymer, acrylonitrile-styrene copolymer, polystyrene, styrene-butadiene-styrene copolymer, styrene-isoprene-styrene copolymer and styrene-acrylic acid copolymer, vinyl chloride resins, vinyl fluoride resins such as polyvinyl fluoride and polyvinylidene fluoride, amide resins such as 6-nylon, 6,6-nylon and 12-nylon, saturated ester resins such as polyethylene terephthalate and polybutylene terephthalate, polycarbonates, polyphenylene oxide, polyacetals, polyphenylene sulfide, silicone resins, thermoplastic urethane resins, polyether ether ketones, polyether imides, various thermoplastic elastomers, their cross-linked resins, and the like.

Among the above-described thermoplastic resins, polyolefin resins can be especially preferably used, for the reason that the polyolefin resins are superior in the recycling properties and the solvent resistance, and the like.

The olefin constituting the polyolefin resin includes ethylene, propylene, butene, hexene, and the like. Specific examples of the polyolefin resin include polyethylene-based resins such as low density polyethylene, linear polyethylene, and high density polyethylene, polypropylene-based resins such as propylene homopolymer and propylene-ethylene copolymer, poly(4-methylpentene-1), poly(butene-1), and ethylene-vinyl acetate copolymer.

In order to obtain a film that is superior in strength, it is preferable to use a thermoplastic resin containing 10% by weight or more of a thermoplastic resin having a molecular chain length of 2,850 nm or more (the amount of the thermoplastic resin is defined as 100% by weight). Hereinafter, a thermoplastic resin having a molecular chain length of 2,850 nm or more is sometimes referred to as a long molecular chain polymer. From the viewpoint of strength, a thermoplastic resin containing 20% by weight of the long molecular chain polymer is more preferably used, and a thermoplastic resin containing 30% by weight of the long molecular chain polymer is further preferably used. Since the resin containing the long molecular chain polymer particularly has high melt viscosity and low melt elongation, a film with uniform thickness cannot be obtained by a usual molding method such as T-die molding and inflation molding. However, a film is successfully obtained by the film forming according to the method of the present invention.

When a thermoplastic resin containing 10% by weight of a thermoplastic resin having a molecular chain length of 2,850 nm or more is used as a material, it is preferred that a wax having a weight average molecular weight of 700 to 6,000 be further used together. The wax is usually a solid substance at 25°C. The material containing a long molecular chain polymer and a wax has good stretchability. Furthermore, a film obtained by using the material is superior in strength. The amount of the wax contained in the material is preferably 5 to 100 parts by weight and further preferably 10 to 70 parts by weight, relative to 100 parts by weight of the thermoplastic resin when the amount of the thermoplastic resin contained in the material is defined as 100 parts by weight.

When a polyolefin resin is used as a thermoplastic resin, an olefin wax is preferably used as a wax.

Examples of the olefin wax include ethylene resin waxes such as ethylene homopolymer and ethylene-$\alpha$-olefin copolymers, propylene resin waxes such as propylene homopolymer and propylene-ethylene copolymers, waxes of poly (4-methylpentene-1), poly(butene-1), and ethylene-vinyl acetate copolymer.

In the present invention, the molecular chain length, the weight average molecular chain length, the molecular weight, and the weight average molecular weight of a thermoplastic resin and wax can be measured by GPC (gel permeation chromatography). Also, the amount of a long molecular chain polymer contained in the thermoplastic resin (% by weight) can be calculated by integration of molecular weight distribution curves obtained by the GPC measurement of the thermoplastic resin containing the long molecular chain polymer.

The molecular chain length is a molecular chain length based on polystyrene conversion by the GPC (gel permeation chromatography) measurement set forth bellow, and can be particularly calculated by the following procedures.

As a mobile phase of the GPC measurement, a solvent which can dissolve an unknown sample to be measured and a standardized polystyrene with a known molecular weight is used. At first, a plurality of kinds of standardized polystyrenes with different molecular weights is subjected to the GPC measurement to obtain the retention time for each standardized polystyrene. Using Q factor of polystyrene, the molecular chain length of each standardized polystyrene is calculated and accordingly, the molecular chain length of each standardized polystyrene and the retention time corresponding thereto are made known. Incidentally, the molecular weight, the molecular chain length and the Q factor of the standardized polystyrene have the following relationship:

$$\text{Molecular Weight} = \text{Molecular Chain Length} \times \text{Q Factor.}$$

Next, the GPC measurement is carried out for an unknown sample to obtain a retention time-eluted component amount curve. In the GPC measurement of the standardized polystyrene, when the molecular chain length of the standardized polystyrene whose retention time is T is defined as L, "the molecular chain length based on polystyrene conversion" of the component whose retention time is T in the GPC measurement of an unknown sample is defined as L. Using this relation, from the retention time-eluted component amount curve of the unknown sample, the molecular chain length distribution based on polystyrene conversion of the unknown sample (the relation between the molecular chain length based on polystyrene conversion and the eluted component amount) can be obtained.

The material used in the present invention may be a material comprising 100 parts by weight of the thermoplastic resin and 10 to 300 parts by weight of a filler relative to 100 parts by weight of the thermoplastic resin.

When a film is produced by a conventional molding method using the material containing a thermoplastic resin and a filler, problems such as melt fracture and getting a blind-shaped hole are likely to occur on the film, and it is difficult to continuously obtain a film with good film thickness precision for a long time. According to the method of the present invention, a film with good film thickness precision can be continuously produced for a long time using the above-described materials. Furthermore, the obtained film is superior in rigidity.

As the filler, an inorganic or organic filler can be used. Examples of the inorganic filler, which can be used, include calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolites, glass powder, and zinc oxide. Two or more kinds of the inorganic fillers may be used. The inorganic filler and organic filler may be used together. Since the filler can be easily removed from the film obtained by using a material containing a thermoplastic resin and a filler, it is preferred that the filler be calcium carbonate.

As the organic filler, a variety of resin particles can be used and preferable examples thereof include resin particles made of styrene, vinyl ketone, acrylonitrile, methyl methacrylate, ethyl methacrylate, glycidyl methacrylate, glycidyl acrylate, methyl acrylate and the like, and particles made of polycondensed resins such as melamine and urea. Two or more kinds of the organic fillers may be used.

The material used in the present invention may contain an additive such as a fatty acid ester, a stabilizer, an antioxidant, an ultraviolet absorbent, a flame retardant or a nonionic surfactant within the range which does not interfere with the purpose of the invention.

The material containing a thermoplastic resin and a filler, and optionally an additive, can be obtained by strongly kneading the material using a roll or banbury kneader, an extruder, or the like. A film containing a thermoplastic resin can be produced by the method of the present invention using the material obtained as above.

The film obtained by the method of the present invention usually has a thickness of 20 to 100 $\mu$m. According to the method of the present invention, even when a film with 100 $\mu$m or less is produced using a material containing a long molecular chain polymer, a film with high thickness precision such as the film having a thickness within the average thickness within $\pm5\%$ is obtained.

A porous film can be obtained by stretching a film containing a thermoplastic resin and a filler obtained by using the material containing a thermoplastic resin and a filler, or a filler-free film obtained by removing a filler from the film. The film or filler-free film can be stretched using a tenter, roller, autograph, or the like. From the viewpoint of air permeability of a porous film, the stretch ratio is preferably 2 to 12 times and more preferably 4 to 10 times. The stretching temperature is usually a temperature not less than the softening point and not more than the melting point of thermoplastic resin, and is preferably from 80 to 115°C. When the stretching temperature is too low, the film is likely to break when stretching a film, and when the stretching temperature is too high, the obtained porous film sometimes has low air permeability and ion permeability. In addition, it is preferable to carry out heat setting after stretching. The heat setting temperature is preferably a temperature lower than the melting point of the thermoplastic resin.

When the filler is removed from the film containing a thermoplastic resin and a filler obtained by using the material containing a thermoplastic resin and a filler, a liquid or the like is used. The liquid to be used is properly selected depending on the type of the filler in the film, and when the filler essentially dissolves in an acid such as calcium carbonate, an acid aqueous solution can be used. The method for removing a filler includes a method of showering a liquid on a film, a method of immersing a film into a tank with a liquid inside, and the like. The method for removing a filler may be either a batch system or a continuous system, but is preferably a continuous system from the viewpoint of productivity, and examples include a method for putting a liquid in the tank with two or more rollers disposed inside and feeding a film by the rolling rollers to pass through the liquid. When the liquid is an acid or alkaline aqueous solution, it is preferred that the film from which the filler has been removed be further washed with water. When the film is washed, the film should be washed to an extent that a salt dissolved in the film or the like is not precipitated. The filler-free film from which a filler has been removed is dried within the time and temperature ranges that do not usually change physical properties of the film. It is preferred that the filler remain around 100 to 20,000 ppn in the filler-free film. The film in which the filler remains in a small amount, when the film is stretched by the above-described method to obtain a porous film and the porous film was used as a battery separator, is expected to have the effect of preventing a short circuit between the electrodes even if the thermoplastic resin constituting the porous film is melted. Also, the porous film obtained by stretching the film in which the filler remains in a small amount as described above is more superior in air permeability than a filler-free film from which the filler has been completely removed.

When the filler is calcium carbonate, and an acid aqueous solution is used in removing calcium carbonate from the film containing a thermoplastic resin and a filler, for increasing the rate of removing calcium carbonate, a surfactant or water-soluble organic solvent such as methanol, ethanol, isopropanol, acetone and N-methylpyrrolidone may be added in small amounts to the acid aqueous solution. The surfactant includes a known nonionic surfactant, cationic surfactant, anionic surfactant and the like, and is preferably a nonionic surfactant. A nonionic surfactant is hard to be hydrolyzed even when an acid aqueous solution is highly acidic (pH 3 or less). Examples of the nonionic surfactant include polyoxyethylene alkyl ether, polyoxyethylene-polyoxypropylene alkyl ether, polyoxyethylene alkyl phenyl ether, polyethylene glycol fatty acid ester, polyoxyethylene alkylamine, and fatty acid amide. The amount of the nonionic surfactant added to the acid aqueous solution is preferably 0.05 to 10% by weight from the viewpoint of the balance of the effect of increasing the rate of removing the filler, and the efficiency of further removing the surfactant from the film after removing filler from the film.

In the present invention, a porous heat-resistant layer can be laminated on at least one surface of the porous film obtained by the above-described method. The film obtained by laminating a heat-resistant layer with the porous film is called as a laminated porous film. The heat-resistant layer may be disposed on surface and may be disposed on both surfaces of the porous layer. The porous film and laminated porous film of the present invention are superior in uniformity of film thickness, strength, and air permeability (ion permeability), and thus can be suitably used as a battery separator. Particularly, the laminated porous film is also superior in heat resistance, and thus is suitable as a separator for non-aqueous electrolyte battery, especially, a separator for lithium ion secondary battery.

The heat-resistant layer can be formed using a heat-resistant resin, heat-resistant inorganic particles, and heat-resistant organic particles. The heat-resistant layer is preferably a polymer containing a nitrogen atom in the main chain and particularly preferably a polymer containing an aromatic ring, from the viewpoint of heat resistance. Examples include aromatic polyamide (hereinafter, referred to as "aramid" in some cases), aromatic polyimide (hereinafter, referred to as "polyamide" in some cases), aromatic polyamideimide. Examples of the aramid includes meta-oriented aromatic polyamide and para-oriented aromatic polyamide (hereinafter, referred to as "para-aramid" in some cases), and para-aramid is likely to form a porous heat-resistant resin layer having a uniform film thickness and superior air permeability, and thus is preferable.

The para-aramid is obtained by polycondensation of a para-oriented aromatic diamine and a para-oriented aromatic dicarboxylic halide, and consists substantially of a repeating unit in which an amide bond is bound at a para-position or according to orientation position of an aromatic ring (for example, orientation position extending coaxially or in parallel to the reverse direction, such as 4,4'-biphenylene, 1,5-naphthalene, or 2,6-naphthalene). Specific examples include para-aramids having a para-orientation type structure or a structure according to the para-orientation type, such as poly(para-phenyleneterephthalamide), poly(para-benzamide), poly(4,4'-benzanilide terephthalamide), poly(para-phenylene-4,4'-biphenylene dicarboxylic amide), poly(para-phenylene-2,6-naphthalene dicarboxylic amide), poly(2-chloro-para-phenyleneterephthalamide), and para-phenyleneterephthalamide/2,6-dichloro para-phenyleneterephthalamide copolymer.

When the heat-resistant resin layer is arranged, a coating solution in which a heat-resistant resin is usually dissolved in a solvent is used. When the heat-resistant resin is para-aramid, a polar amide solvent or a polar urea solvent can be used as the solvent, and the solvent specifically includes N,N-dimethylformamide, N,N-dimethylacetamide, N-methyl-2-pyrrolidone, tetrarnethylurea, and the like, but is not limited thereto.

From the viewpoint of coatability to the porous film, the heat-resistant resin is preferably a heat-resistant resin having an intrinsic viscosity of 1.0 dl/g to 2.8 dl/g and further preferably a heat-resistant resin having an intrinsic viscosity of 1.5 dl/g to 2.5 dl/g. The intrinsic viscosity herein referred to is a value measuring the sulfuric acid solution of heat-resistant resin obtained by dissolving the once precipitated heat-resistant resin in sulfuric acid, so-called a value vindicating the molecular weight. From the viewpoint of coatability to the porous film, the concentration of the heat-resistant resin in the coating solution is preferably from 0.5 to 10% by weight.

When a para-aramid is as the heat-resistant resin, for the purpose of improving solubility of para-aramid to a solvent, it is preferable to add a chloride of an alkali metal or alkali earth metal upon polycondensation of a para-oriented aromatic diamine and a para-oriented aromatic dicarboxylic halide. Specific examples include lithium chloride and calcium chloride, but are not limited thereto. The amount of the chloride added to the polymer is preferably in the range of from 0.5 to 6.0 mol and further preferably in the range of from 1.0 to 4.0 mol, per 1.0 mol of the amide group generated by polycondensation.

The polyimide used in the present invention is preferably wholly aromatic polyimides produced by polycondensation of an aromatic diacid anhydride and a diamine. Specific examples of the diacid anhydride include pyromellitic dianhydride, 3,3',4,4'-diphenylsulfone tetracarboxylic dianhydride, 3,3',4,4'-benzophenone tetracarboxylic dianhydride, 2,2'-bis(3,4-dicarboxyphenyl)hexafluoropropane, and 3,3',4,4'-biphenyl tetracarboxylic dianhydride. Specific examples of the diamine include oxydianiline, para-phenylenediamine, benzophenonediamine, 3,3'-methylenedianiline, 3,3'-diaminobenzophenone, 3,3'-diaminodiphenylsulfone, and 1,5'-naphthalenediamine, but the present invention is not limited thereto. In the present invention, a solvent-soluble polyimide can be suitably used. Examples of such polyimide include a polyimide which is a polycondensate of 3,3',4,4'-diphenylsulfone tetracarboxylic dianhydride and an aromatic diamine. As a polar organic solvent dissolving a polyimide, dimethyl sulfoxide, cresol, and o-chlorophenol, in addition to those exemplifying a solvent dissolving an aramid, can be suitably used.

It is particularly preferred that the coating solution used for forming a heat-resistant layer in the present invention contain ceramics powder. A heat-resistant layer is formed using a coating solution to which ceramics powder is added to the solution having arbitrary heat-resistant resin concentration, whereby a fine porous heat-resistant layer having a uniform film thickness can be formed. Also, air permeability of the heat-resistant layer to be formed can be controlled by the amount of ceramics powder added. From the viewpoint of strength of the laminated porous film and smoothness of the surface of the heat-resistant layer, the used ceramics powder has primary particles having an average particle size of preferably 1.0 $\mu$m or less, more preferably 0.5 $\mu$m or less, and further preferably 0.1 $\mu$m or less. The average particle size of the primary particles is measured by the method of analyzing a photograph obtained by an electron micrograph with a particle size meter. The content of the ceramics powder in the heat-resistant layer is preferable 1% by weight or more and 95% by weight or less and more preferably 5% by weight or more and 50% by weight or less. The shape of the used ceramics powder is not particularly limited, and a spherical shape or a random shape can be used.

The ceramics powder includes ceramics powder made of metal oxide, metal nitride, and metal carbide and the like, which have electrically insulation performance, and examples include the powder made of alumina, silica, titanium dioxide, zirconium oxide and the like, which are preferably used. The ceramics powder may be used singly or can be used as a mixture of two or more kinds thereof, and the same or different kind of ceramics powder having different particle size can be also optionally mixed and used.

The average pore size of the heat-resistant layer measured by a mercury penetration method is preferably 3 $\mu$m or less and further preferably 1 $\mu$m or less. When the average pore size exceeds 3 $\mu$m, in the case where a laminated porous film having a heat-resistant layer is used as a battery separator, it is possible to cause a problem such as likely to short circuit when carbon powder mainly constituting a positive electrode and a negative electrode or a piece thereof falls off. The porosity of the heat-resistant layer is preferably from 30 to 80% by volume and further preferably from 40 to 70% by volume. The heat-resistant layer has a thickness of preferably from 1 to 15 $\mu$m and further preferably from 1 to 10 $\mu$m.

The method for laminating a heat-resistant layer with a porous film includes a method of separately producing a heat-resistant layer and then laminating with a porous film, a method of applying a coating solution containing ceramics powder and heat-resistant resin on at least one surface of the porous film, and the like, and from the aspect of productivity, the latter method is preferable.

The film containing a thermoplastic resin obtained by the method of the present invention can be suitably used as various packaging materials such as food packaging films and various packaging containers, and as intermediate products or finished products of electronic and electronic component materials and the like. Also, the porous film and laminated porous film of the present invention are superior in uniformity of film thickness, strength, and air permeability (ion permeability), and thus can be suitably used as a battery separator. Particularly, the laminated porous film is also superior in heat resistance, and thus is suitable as a separator for nonaqueous electrolyte battery, especially a separator for lithium ion secondary battery.

**EXAMPLES**

Hereinbelow, examples are shown in order to describe the present invention in more detail, but the present invention is not limited to these examples. First, the used measurement methods, measuring apparatuses and the like will be described.

[MT]

As a measurement apparatus, Capirograph 1B PC-9801VM manufactured by Toyo Seiki Manufacturing Co., Ltd. was employed, and an orifice with a diameter D = 2.095 mm and a length L = 14.75 mm was used. First, resin was extruded at a rate of 5 mm/min at a prescribed temperature and pulled out while increasing the pulling out speed, and the pulling out speed when the resin was cut was defined as "maximum pulling out speed". The melt tensile strength at the maximum pulling out speed was set to be the melt tensile strength at that temperature.

[L]

As a measurement apparatus, Capirograph 1B PC-9801VM manufactured by Toyo Seiki Manufacturing Co., Ltd. was employed, and an orifice with a diameter D = 2.095 mm and a length L = 14.75 mm was used. First, a resin was extrided at a rate of 5 mm/min, and diameter D1 (mm) of the resin was determined. Next, the resin was pulled out while increasing the pulling out speed, and diameter D2 (mm) of the resin when the resin was cut was determined to calculate the degree of elongation from the following equation:

$$\text{Degree of Elongation (\%)} = [(D1^2 - D2^2)/D2^2] \times 100.$$

[Measurement of Molecular Chain Length and Molecular Weight by GPC]

As a measurement apparatus, Gel Chromatograph Alliance GPC2000 model manufactured by Waters Co. was employed. Other conditions are shown below:

Column:TSKgel GMHHR-H(S)HT 30 cm × 2 and TSK gel GMH6-HTL 30 cm
× 2, manufactured by Tosh Corporation
Mobile phase:o-dichlorobenzene
Detector:differential refractometer
Flow rate:1.0 mL/minute
Column temperature:140°C
Injection amount:500 μL.
After 30 mg of a sample was completely dissolved in 20 mL of o-dichlorobenzene at 145°C, the solution was filtered through a sintered filter with a pore diameter of 0.45 μm, and the obtained filtrate was used as a supply solution. Incidentally, the calibration curves were produced using 16 kinds of standardized polystyrenes with a known molecular weight. As Q factor of polystyrene was set to be 41.3.

[Measurement of Film Thickness]

The thickness of the obtained film was determined by measuring at 10 or more points in the width direction and in the longitudinal direction using Off-line Sheet Thickness Meter (TOF2 Var 3.22) manufactured by Yamabun Electrics Co., Ltd. The average value of all of the measured values was calculated and further the ratio (positive sign) of the difference between the maximum value among the measured values and the average value to the average value was calculated. Furthermore, the ratio (negative sign) of the difference between the minimum value among the measured values and the average value to the average value was calculated. The thickness precision was expressed based on these ratios.

[Measurement of Crystallinity]

Measurement of crystallinity was carried out by wide angle x-ray diffractometry. A wide angle X-ray diffractometer RINT2000 manufactured by Rigaku Corporation was for the measurement. When the crystallinity of the material containing a thermoplastic resin and a filler was measured, x-ray measurement was carried out with a sample from which the filler was removed from the material with a solvent, and the total scattering intensity curve of x-ray was separated into the range showing a scattering contribution of the crystalline part of the resin and the range showing a scattering contribution of the amorphous part of the resin, then the crystallinity was calculated from the area intensity ratio of each range.

[Measurement of Melting Point Tm by DSC]

The melting point was measured using a differential scanning calorimeter (DiamondDSC manufactured by Perkin Elmer Inc.) according to ASTM D3417. A test piece in a measuring pan was kept at 150°C for 5 minutes, cooled from 150°C to 20°C at a rate of 5°C /min, kept at 20°C for 2 minutes, and heated from 20°C to 150°C at a rate of 5°C /min. The peak top temperature of the melting curve obtained in the last heating step was defined as a melting point (Tm (°C)). When a plurality of peaks exists in the melting curve, the peak temperature having the highest heat of fusion $\Delta H$ (J/g) was defined as a melting point (Tm (°C)).

[Example 1]

A mixture obtained by mixing 100 parts by weight of a resin mixture obtained by mixing a polyethylene powder (Hi-Zex Million 340M, manufactured by Mitsui Chemicals Inc., weight average molecular chain length 17,000 nm, weight average Molecular weight 3,000,000, melting point 136°C) and a low molecular weight polyethylene powder (Hi-wax 110P, manufactured by Mitsui Chemicals Inc., weight average molecular weight 1,000, melting point 110°C) so as to have 70% by weight of the polyethylene powder and 30% by weight of the low molecular weight polyethylene powder, 160 parts by weight of calcium carbonate (manufactured by Maruo Calcium Co.,Ltd., average particle diameter of 0.10 μm) and 3 parts by weight of an antioxidant (IRG1010/Irf168 = 2/1) was melt-kneaded by a biaxial kneader at 200°C to obtain a resin composition. When the weight of the thermoplastic resin in this resin composition is defined as 100% by weight, the content of the polyethylene with a molecular chain length of 2,850 nm or higher in the resin was 20% by weight. The crystallinity of the resin composition measured by an X-ray method was 54%. The melting point Tm of the resin composition was 130°C.

A film was prepared using the resin composition by the method shown in Fig. 7. Specifically, from a multi-slot die set at 250°C capable of extruding a flat cylindrical film, this resin composition was extruded as one flat cylindrical film having a pair of opposed flat portions linked together by connecting portions at their end portions, fed to between the pair of rollers rotating at the same peripheral speed, set at a roller surface temperature $T_R$ =149°C in a molten state, and subsequently rolled, with the pair of rollers, the pair of flat portions being stacked, while forming a rolling bank made of the resin composition at the entrance of the gap between the rollers and inside the cylindrical film, thereby welding the flat portions to each other to form a united film. The obtained film had a film thickness of about 80 μm. Incidentally, the melt tensile strength of the resin composition at 149°C was 140 g or higher, and the degree of elongation was about 300%.

[Example 2]

A polyethylene powder (Hi-Zex Million 340M, manufactured by Mitsui Chemicals Inc. , weight average molecular chain length 17,000 nm, weight average molecular weight 3,000,000, melting point 136°C), a low Molecular weight polyethylene powder (Hi-wax 110P, manufactured by Mitsui Chemicals Inc., weight average molecular weight 1,000, melting point 110°C), and polymethylpentene (TPX MX004 manufactured by Mitsui Chemicals Inc., melting point 200°C) were mixed so as to have 60% by weight of the polyethylene powder, 28% by weight of the low molecular weight polyethylene powder, and 12% by weight of polymethylpentene to obtain a resin mixture. A mixture obtained by mixing 100 parts by weight of the resin mixture, 160 parts by weight of calcium carbonate (manufactured by Maruo Calcium Co.,Ltd., average particle diameter of 0.10 μm) and 3 parts by weight of an antioxidant (IRG1010/Irf168 = 2/1) based on 100 parts by weight of the resin mixture was melt-kneaded by a biaxial kneader at 230°C to obtain a resin composition.
The same procedures as in Example 1 were carried out using the resin composition except for using rollers set at a roller surface temperature $T_R$ = 147°C, to prepare a film with a film thickness of about 80 μm. Incidentally, the melt tensile strength of the thermoplastic resin at 147°C was 140 g or higher, and the degree of elongation was about 300%. The crystallinity of the resin composition measured by an X-ray method was 47%.

[Example 3]

A mixture obtained by mixing a polyethylene powder (Hi-Zex Million 340M, manufactured by Mitsui Chemicals Inc., weight average molecular chain length 17,000 nm, weight average molecular weight 3,000,000, melting point 136°C) and a low molecular weight polyethylene powder (Hi-wax 110P, manufactured by Mitsui Chemicals Inc., weight average molecular weight 1,000, melting point 110°C) so as to have 80% by weight of the polyethylene powder and 20% by weight of the low Molecular weight polyethylene, powder was melt-kneaded by a biaxial kneader at 230°C to obtain a resin composition.
The same procedures as in Example 1 were carried out using the resin composition except for using a pair of rollers set at a roller surface temperature of 147°C rotating with a difference in the peripheral speed of 7%, to prepare a film. The obtained film had a film thickness of about 60 μm. Incidentally, the melt tensile strength of the thermoplastic resin at 147°C was 140 g or higher, and the degree of elongation was about 300%. The crystallinity of the resin composition measured by an X-ray method was 54%.

[Comparative Example 1]

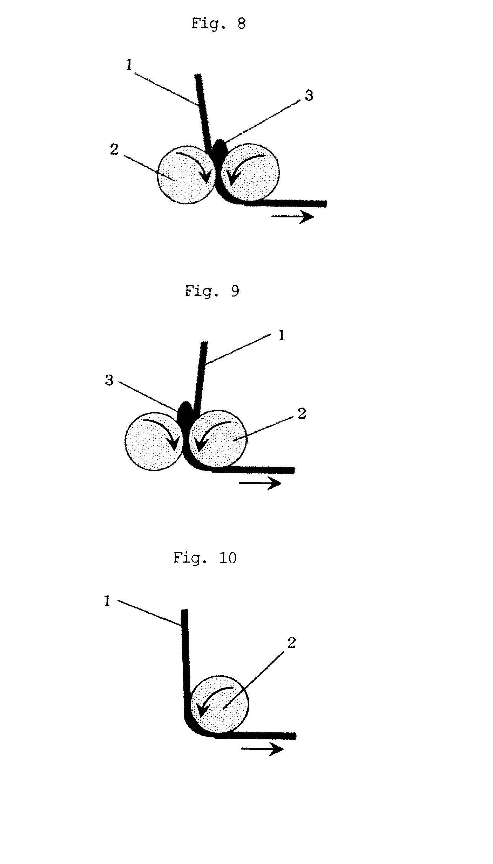

The same resin composition as in Example 1 was used. The resin composition was extruded as a sheet from a T-die for forming a single layer film (250°C) and fed to between the pair of rollers set at the same surface temperature as in Example 1 in a molten state. As shown in Fig. 8, only one surface of the sheet, in other words, the sheet was rolled with rollers while forming a rolling bank only between a roller disposed in the direction in which the sheet was pulled out and the sheet fed to between the rollers, to prepare a film with a film thickness of about 80 μm.

[Comparative Example 2]

As shown in Fig. 9, the same procedures as in Comparative Example 1 were carried out except for rolling only one surface of the sheet, in other words, the sheet was rolled with rollers while forming a rolling bank only between a roller disposed in a direction opposite to the direction in which the sheet was pulled out and the sheet fed to between the rollers, to prepare a film with a film thickness of about 80 μm.

[Comparative Example 3]

The same resin composition as in Example 1 was used. The resin composition was extruded as a sheet from a T-die for forming a single layer film (250°C), and production of a film was attempted while pulling out the sheet with a roller with a surface temperature $T_R$ = 149°C as shown in Fig. 10. A number of fractures were generated on the resulting molded product to make blind-shaped holes, and thus the film thickness could not be measured.

[Comparative Example 4]

Production of a films was attempted by the inflation molding method at a metal mold surface temperature of 230°C using the same resin composition as in Example 1. However, as in Comparative Example 3, a number of fractures were generated on the resulting molded product to make blind-shaped holes, and thus the film thickness could not be measured.

The results of Examples and Comparative Examples were summarized in Table 1. As shown in Table 1, the films of Examples 1 to 3 were superior in not only thickness precision but also appearance as compared to the films of Comparative Examples 1 to 4.

Table 1

| | Temperature of Rollers (°C) | Peripheral Speed of Rollers Difference (%) | Shape or Rolling Bank | Gloss in Both Surfaces (Visual Observation) | Average Thickness ($\mu$m) | Unevenness in Thickness | Remark |
|---|---|---|---|---|---|---|---|
| Example 1 | 149 | Substantially Same Speed | Fig. 7 | Glossy on Both Surfaces | 80 | 1.3 | |
| Example 2 | 147 | Substantially Same Speed | Fig. 7 | Glossy on Both Surfaces | 80 | 2.1 | |
| Example 3 | 147 | 7% | Fig. 7 | Glossy on Both Surfaces | 60 | 2.5 | |
| Comparative Example 1 | 149 | Substantially Same Speed | Fig. 8 | Glossy on Under Surface Only | 80 | 3.8 | |
| Comparative Example 2 | 149 | Substantially Same Speed | Fig. 9 | Glossy on Top Surface only | 80 | 3.0 | |
| Comparative Example 3 | 149 | - | Fig. 10 | Glossy on Top Surface in Places | Unmeasurable | × | Melt Fracture |
| Comparative Example 4 | - | - | - | No Gloss | Unmeasurable | × | Melt Fracture |

INDUSTRIAL APPLICABILITY

According to the present invention, a film with high film thickness precision can be produced even when a thermoplastic resin such as polyvinyl chloride and polyolefin, especially a resin with a high melt viscosity and low melt elongation is used as a material for producing a film.

**DESCRIPTION OF REFERENCE SIGNS**

| | |
|---|---|
| 1 | Material |
| 2 | Roller |
| 3 | Rolling bank |
| 4 | Multi-slot T-die |
| 5 | Extruder |
| 6 | Die capable of extruding one flat cylindrical film having a pair of opposed flat portions linked together by connecting portions at their end portions |

**Claims**

1. A method for producing a film comprising a thermoplastic resin, the method conprising:

   a step of feeding a material containing a thermoplastic resin and having a pair of opposed flat portions to between a pair of rollers with the thermoplastic resin in a molten state, and a step of rolling, with the pair of rollers, the pair of flat portions being stacked, thereby welding the flat portions to each other to form a united film, wherein the material to be fed to between the rollers is two separate films each having a flat portion or one flat cylindrical film having a pair of opposed flat portions linked together by connecting portions at their end portions.

2. The method according to claim 1, wherein the step of rolling the pair of flat portions being stacked is a step of rolling, with the pair of rollers, the pair of flat portions being stacked, while forming a rolling bank made of the material at the entrance of the gap between the rollers and on a side of the material opposite to the side at which each of the material comes into contact with each of the rollers, thereby welding the flat portions to each other to form a united film.

3. The method according to claim 2, wherein the rolling bank is prevented from coming into contact with the pair of rollers.

4. The method according to any one of claims 1 to 3, wherein the surface temperature $T_R$ of the rollers satisfies the following condition 1:

   (Condition 1)
   when the thermoplastic resin is crystalline,
   $T_R>Tm$
   when the thermoplastic resin is not crystalline,
   $T_R>Tg$
   where Tm is the melting point of the thermoplastic resin and Tg is the glass transition temperature of the thermoplastic resin.

5. The method according to any one of claims 1 to 4, wherein the surface temperature $T_R$ of the rollers is a temperature at which the melt tensile strength MT of the thermoplastic resin is greater than 10 g and the degree of elongation L of the thermoplastic resin is greater than 100%.

6. The method according to any one of claims 1 to 5, wherein the material to be fed to between the rollers is one flat cylindrical film having a pair of opposed flat portions linked together by connecting portions at their end portions.

7. The method According to claim 6, wherein the material is extruded through a multi-slot T-die.

8. The method according to any one of claims 1 to 7, wherein the thermoplastic resin in the materials contains 10% by weight or more of a thermoplastic resin having a molecular chain length of 2,850 nm or more when the weight of the thermoplastic resin contained in the material is 100% by weight.

9. The method according to any one of claims 1 to 8, wherein the material comprises 100 parts by weight of the thermoplastic resin and 10 to 300 parts by weight of a filler relative to 100 parts by weight of the thermoplastic resin.

10. A film comprising a thermoplastic resin and a filler produced by the method according to claim 9.

11. A porous film produced by removing the filler from the film according to claim 10 to form a filler-free film, and then stretching the filler-free film.

12. A laminated porous film produced by laminating a heat-resistant layer with the porous film according to claim 11.

13. The porous film according to claim 11, which is a battery separator.

14. The laminated porous film according to claim 13, which is a battery separator.

15. A battery containing the battery separator according to claim 13 or 14.

16. The battery according to claim 15, wherein the battery is a non-aqueous electrolyte secondary battery.

Fig. 1

Fig. 2

Fig. 3

Fig. 4

Fig. 5

Fig. 6

Fig. 7

Fig. 8

Fig. 9

Fig. 10

<table>
<tr><td colspan="2" align="center">**INTERNATIONAL SEARCH REPORT**</td><td colspan="2">International application No.<br>PCT/JP2011/058489</td></tr>
</table>

A.  CLASSIFICATION OF SUBJECT MATTER
*B29C43/22*(2006.01)i, *B29C43/34*(2006.01)i, *B29C47/14*(2006.01)i, *B29C47/88*
(2006.01)i, *B29C55/18*(2006.01)i, *H01M2/16*(2006.01)i, *B29L7/00*(2006.01)n

According to International Patent Classification (IPC) or to both national classification and IPC

B.  FIELDS SEARCHED

Minimum documentation searched (classification system followed by classification symbols)
B29C43/22, B29C43/34, B29C47/14, B29C47/88, B29C55/18, H01M2/16, B29L7/00

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2004-284356 A  (Sumitomo Chemical Co., Ltd.),<br>14 October 2004 (14.10.2004),<br>claims; paragraphs [0002], [0010], [0011],<br>[0017] to [0027], [0031], [0032]; fig. 2<br>& US 2004/0258881 A1    & EP 1454742 A2<br>& DE 602004006544 D    & CA 2459448 A<br>& KR 10-2004-0078892 A  & CN 1539549 A<br>& CA 2459448 A1 | 1,4-6,8-16<br>7<br>2,3 |
| X | JP 2001-500079 A  (Du Pont Canada Inc.),<br>09 January 2001 (09.01.2001),<br>claims; drawings<br>& US 6077373 A          & EP 925187 A<br>& WO 1998/010935 A1    & CA 2263606 A | 1,2,6 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 May, 2011 (27.05.11) | Date of mailing of the international search report<br>07 June, 2011 (07.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/058489

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 7-314629 A (Sumitomo Chemical Co., Ltd.), 05 December 1995 (05.12.1995), paragraph [0047] & US 5913999 A  & EP 644032 A3 & EP 818306 A2  & EP 644032 A2 & DE 69415449 C  & DE 69415449 T & DE 69423791 D  & DE 69423791 T | 7 |

Form PCT/ISA/210 (continuation of second sheet) (July 2009)

**EP 2 554 350 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10296766 A
- JP 2002264160 A
- JP 6063981 A